# EUROPEAN PATENT APPLICATION

(11) **EP 1 130 910 A2**
(43) Date of publication of application: **05.09.2001**
(21) Application number: 00127091.7
(22) Date of filing: 11.12.2000
(51) Int. Cl.: H04N 5/445

(54) **Program guide displaying apparatus and method**

(30) Priority: 31.01.2000 JP 2000027314
(71) Applicant: Pioneer Corporation, Tokyo-to (JP)
(72) Inventor: Inoue, Tatsu, c/o Pioneer Corporation Ohmori Works, Tokyo-to (JP)
(74) Representative: Viering, Jentschura & Partner

(57) **Abstract**

A program guide displaying apparatus (1) displays a program table, in which a plurality of program information are displayed in a 2-dimension of a time axis and a channel axis. The program guide displaying apparatus is provided with: a program information obtaining device (3 to 7) for obtaining the program information including information indicative of a program name, a start time, a length of a program or an end time, a broadcasting channel and a broadcasting date of respective one of a plurality of programs; a date setting device (12, 13, 17) for setting a date of the program table to be displayed; and a displaying device (9, 17, 200) for extracting the program information corresponding to the date set by the date setting device from among the program information obtained by the program information obtaining device, displaying the extracted program information as the program table corresponding to the date set by the date setting device and, if the date of the program table is changed by the date setting device, displaying the extracted program information as the program table corresponding to the changed date with a display time band set in advance.

## Description

### BACKGROUND OF THE INVENTION

### 1. Field of the Invention

The present invention relates to an EPG (Electronic Program Guide).

### 2. Description of the Related Art

There is a digital broadcasting system, in which a digitized television signal is transmitted through a broadcasting satellite, a communicating satellite or the like, and is received by each home so that a user can view a television program. In such a system, since a plurality of channels can be reserved, it is possible to broadcast a large number of programs.

In the digital broadcasting system, information related to an EPG indicating the broadcasting contents of a large number of programs is transmitted from the satellite to each home together with video and audio information of the programs. At each home, the user operates a receiving apparatus so as to display the EPG on a TV (Television) set and search for his or her favorite program. Normally, in the display of the EPG, the user uses a remote control device attached to the receiving apparatus to search for the favorite program.

However, in this kind of digital broadcasting system, since more than 100 channels can be watched, it is a time and labor consuming job for the user to search for the favorite program from among the channels and select it. Thus, it is desired that, when the user changes the displayed date and/or time on the displayed EPG, the user can easily view it and can easily operate on it.

### SUMMARY OF THE INVENTION

It is therefore an object of the present invention to provide an apparatus for and a method of displaying a program guide, which enables a user to speedily search for his or her favorite program by a relatively simple operation.

The above object of the present invention can be achieved by a first program guide displaying apparatus for displaying a program table, in which a plurality of program information are displayed in a 2-dimension of a time axis and a channel axis. The first program guide displaying apparatus is provided with: a program information obtaining device for obtaining the program information including information indicative of a program name, a start time, a length of a program or an end time, a broadcasting channel and a broadcasting date of respective one of a plurality of programs; a date setting device for setting a date of the program table to be displayed; and a displaying device for extracting the program information corresponding to the date set by the date setting device from among the program information obtained by the program information obtaining device, displaying the extracted program information as the program table corresponding to the date set by the date setting device and, if the date of the program table is changed by the date setting device, displaying the extracted program information as the program table corresponding to the changed date with a display time band set in advance.

According to the first program guide displaying apparatus of the present invention, the plurality of program information as for the programs are obtained, and the date of the program table to be displayed is set. Then, from among the obtained program information, the program information corresponding to the set date is extracted and is displayed as the program table. Here, in case that the date of the program table to be displayed is changed, the program table corresponding to the changed date is displayed as for the display time band set in advance. Therefore, the display time band after changing the date is always constant, so that the user can easily grasp the time band of the program table displayed after changing the date.

In one aspect of the first program guide displaying apparatus of the present invention, the displaying device extracts the program information within a time range including the program which is most recently received and within a display channel range including the channel of the program which is most recently received, if the date set by the setting device is a present day, and the displaying device extracts the program information within a predetermined time range set in advance and within a display channel range including the channel of the program which is most recently received, if the date set by the setting device is not the present day.

According to this aspect, when the date of the program table to be displayed is set, if this set date is the present day (i.e., today), the program information within the time range including the program which is most recently received and within the display channel range including the channel of the program which is most recently received is displayed. Alternatively, if this set date is not the present day, the program information within the predetermined time range and within the display channel range including the channel of the program which is most recently received is displayed. Accordingly, in case of any date other than the present date, the display time band after changing the date is always constant, so that the user can easily grasp the time band of the program table displayed after changing the date. Further, in case of the present date, the program table is displayed with the display time band including the present time.

In another aspect of the first program guide displaying apparatus of the present invention, if the date set by the date setting device is a present day, the displaying device displays the program table with the display time band including a present time.

According to this aspect, if the program table on the present day is displayed, it is displayed with the display time band including the present time, so that the user can easily grasp the time band of the program table on the present day.

In another aspect of the first program guide displaying apparatus of the present invention, if the date of the program table is changed by the date setting device, the displaying device displays the program table with a display channel range displayed before the date of the program table is changed.

According to this aspect, even after the date of the program table is changed, the display channel range is not changed, so that the user can easily grasp the display channel range.

The above object of the present invention can be also achieved by a second program guide displaying apparatus for displaying a program table, in which a plurality of program information are displayed in a 2-dimension of a time axis and a channel axis. The second program guide displaying apparatus is provided with: a program information obtaining device for obtaining the program information including information indicative of a program name, a start time, a length of a program or an end time, a broadcasting channel and a broadcasting date of respective one of a plurality of programs; a displaying device for displaying the obtained program information as the program table including a plurality of program cells as for a predetermined display time range and a predetermined display channel range; and a program cell selecting device for selecting one of the program cells within the displayed program table. If the selected program cell is changed in a direction along the time axis by the program cell selecting device and if the changed and selected program cell exceeds the display time range of the program table displayed before changing the selected program cell, the displaying device displays the program table in which the start time of the changed and selected program cell is positioned within a leading display time band.

According to the second program guide displaying apparatus of the present invention, the plurality of program information as for the programs are obtained. Then, a plurality of the program information for the programs are displayed as the program table with the predetermined display time range and the predetermined display channel range. Here, if the program cell selected by the user is changed in the direction along the time axis, and if the changed and selected program cell exceeds the display range, the program table in which the start time of the changed and selected program cell is positioned within the leading display time band is displayed. Consequently, the changed and selected program cell can be displayed in such a manner that the user can easily view it.

In one aspect of the second program guide displaying apparatus of the present invention, the apparatus is further provided with a date setting device for setting a date of the program table to be displayed. The displaying device extracts the program information corresponding to the date set by the date setting device from among the program information obtained by the program information obtaining device and displays the extracted program information as the program table.

According to this aspect, the date of the program table to be displayed is set. Thus, the program table corresponding to the set date, which is freely set by the user, can be displayed.

In another aspect of the second program guide displaying apparatus of the present invention, the apparatus is further provided with a range setting device for setting the display time range and the display channel range. The displaying device extracts the program information within the display time range and within the display channel range set by the range setting device from among the program information obtained by the program information obtaining device and displays the extracted program information as the program table.

According to this aspect, the display time range and the display channel range are set. Then, the program table is displayed with the set display time range and the set display channel range. Thus, the changed and selected program cell can be displayed in such a manner that the user can easily view it.

In another aspect of the second program guide displaying apparatus of the present invention, the displaying device displays a cursor on the selected program cell.

According to this aspect, since the selected program cell is indicated by the cursor, it is possible for the user to speedily find out the program cell corresponding to the program to be displayed.

In another aspect of the second program guide displaying apparatus of the present invention, if the program cell is changed by the program cell selecting device, the displaying device displays the program table with the display channel range same as before the program cell is changed.

According to this aspect, the display channel is not changed even if the selected program cell is changed. Thus, the changed and selected program cell can be displayed in such a manner that the user can easily view it.

In another aspect of the second program guide displaying apparatus of the present invention, if the program cell is changed by the program cell selecting device, the displaying device displays the program table in which the channel of the changed and selected program cell is set as a leading display channel.

According to this aspect, the selected program cell after it is changed can be displayed at a position, which can be easily viewed.

The above object of the present invention can be also achieved by a first program guide displaying method of displaying a program table, in which a plurality of program information are displayed in a 2-dimension of a time axis and a channel axis. The first program guide displaying method is provided with: a program information obtaining process of obtaining the program information including information indicative of a program name, a start time, a length of a program or an end time, a broadcasting channel and a broadcasting date of respective one of a plurality of programs; a date setting process of setting a date of the program table to be displayed; and a displaying process of extracting the program information corresponding to the date set by the date setting process from among the program information obtained by the program information obtaining process, displaying the extracted program information as the program table corresponding to the date set by the date setting process and, if the date of the program table is changed by the date setting process, displaying the extracted program information as the program table corresponding to the changed date with a display time band set in advance.

According to the first program guide displaying method of the present invention, the plurality of program information as for the programs are obtained, and the date of the program table to be displayed is set. Then, from among the obtained program information, the program information corresponding to the set date is extracted and is displayed as the program table. Here, in case that the date of the program table to be displayed is changed, the program table corresponding to the changed date is displayed as for the display time band set in advance. Therefore, the display time band after changing the date is always constant, so that the user can easily grasp the time band of the program table displayed after changing the date.

In one aspect of the first program guide displaying method of the present invention, the displaying process extracts the program information within a time range including the program which is most recently received and within a display channel range including the channel of the program which is most recently received, if the date set by the setting process is a present day, and the displaying process extracts the program information within a predetermined time range set in advance and within a display channel range including the channel of the program which is most recently received, if the date set by the setting process is not the present day.

According to this aspect, when the date of the program table to be displayed is set, if this set date is the present day (i.e., today), the program information within the time range including the program which is most recently received and within the display channel range including the channel of the program which is most recently received is displayed. Alternatively, if this set date is not the present day, the program information within the predetermined time range and within the display channel range including the channel of the program which is most recently received is displayed. Accordingly, in case of any date other than the present date, the display time band after changing the date is always constant, so that the user can easily grasp the time band of the program table displayed after changing the date. Further, in case of the present date, the program table is displayed with the display time band including the present time.

In another aspect of the first program guide displaying method of the present invention, if the date set by the date setting process is a present day, the displaying process displays the program table with the display time band including a present time.

According to this aspect, if the program table on the present day is displayed, it is displayed with the display time band including the present time, so that the user can easily grasp the time band of the program table on the present day.

In another aspect of the first program guide displaying method of the present invention, if the date of the program table is changed by the date setting process, the displaying process displays the program table with a display channel range displayed before the date of the program table is changed.

According to this aspect, even after the date of the program table is changed, the display channel range is not changed, so that the user can easily grasp the display channel range.

The above object of the present invention can be also achieved by a second program guide displaying method of displaying a program table, in which a plurality of program information are displayed in a 2-dimension of a time axis and a channel axis. The second program guide displaying method is provided with: a program information obtaining process of obtaining the program information including information indicative of a program name, a start time, a length of a program or an end time, a broadcasting channel and a broadcasting date of respective one of a plurality of programs; a displaying process of displaying the obtained program information as the program table including a plurality of program cells as for a predetermined display time range and a predetermined display channel range; and a program cell selecting process of selecting one of the program cells within the displayed program table. If the selected program cell is changed in a direction along the time axis by the program cell selecting process and if the changed and selected program cell exceeds the display time range of the program table displayed before changing the selected program cell, the displaying process displays the program table in which the start time of the changed and selected program cell is positioned within a leading display time band.

According to the second program guide displaying method of the present invention, the plurality of program information as for the programs are obtained. Then, a plurality of the program information for the programs are displayed as the program table with the predetermined display time range and the predetermined display channel range. Here, if the program cell selected by the user is changed in the direction along the time axis, and if the changed and selected program cell exceeds the display range, the program table in which the start time of the changed and selected program cell is positioned within the leading display time band is displayed. Consequently, the changed and selected program cell can be displayed in such a manner that the user can easily view it.

In one aspect of the second program guide displaying method of the present invention, the method is further provided with a date setting process of setting a date of the program table to be displayed. The displaying process extracts the program information corresponding to the date set by the date setting process from among the program information obtained by the program information obtaining process and displays the extracted program information as the program table.

According to this aspect, the date of the program table to be displayed is set. Thus, the program table corresponding to the set date, which is freely set by the user, can be displayed.

In another aspect of the second program guide displaying method of the present invention, the method is further provided with a range setting process of setting the display time range and the display channel range. The displaying process extracts the program information within the display time range and within the display channel range set by the range setting process from among the program information obtained by the program information obtaining process and displays the extracted program information as the program table.

According to this aspect, the display time range and the display channel range are set. Then, the program table is displayed with the set display time range and the set display channel range. Thus, the changed and selected program cell can be displayed in such a manner that the user can easily view it.

In another aspect of the second program guide displaying method of the present invention, the displaying process displays a cursor on the selected program cell.

According to this aspect, since the selected program cell is indicated by the cursor, it is possible for the user to speedily find out the program cell corresponding to the program to be displayed.

In another aspect of the second program guide displaying method of the present invention, if the program cell is changed by the program cell selecting process, the displaying process displays the program table with the display channel range same as before the program cell is changed.

According to this aspect, the display channel is not changed even if the selected program cell is changed. Thus, the changed and selected program cell can be displayed in such a manner that the user can easily view it.

In another aspect of the second program guide displaying method of the present invention, if the program cell is changed by the program cell selecting process, the displaying process displays the program table in which the channel of the changed and selected program cell is set as a leading display channel.

According to this aspect, the selected program cell after it is changed can be displayed at a position, which can be easily viewed.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing a structure of a satellite digital broadcast receiving apparatus as an embodiment of the present invention;
FIG. 2 is a diagram showing a method of transmitting data in a digital broadcast in the embodiment;
FIG. 3 is a plan view of a picture plane showing one example of an EPG display in the embodiment;
FIG. 4 is a diagram schematically showing a concept of a structure of EPG display data in the embodiment;
FIG. 5 is a front view of a remote controller used with the receiving apparatus of FIG. 1 in the embodiment;
FIG. 6 is a plan view of a picture plane showing one example of the EPG display after the day-of-week is changed in the embodiment;
FIG. 7 is a plan view of a picture plane showing one example of the EPG display after the time is changed in the embodiment;
FIG. 8 is a flowchart showing an EPG display process in the embodiment;
FIG. 9 is a flowchart showing a process of changing the day-of-week in FIG. 8; and
FIG. 10 is a flowchart showing a process of changing the time in FIG. 8

### DETAILED DESCRIPTION OF THE PREFERRED EMBODIMENTS

Referring to the accompanying drawings, embodiments of the present invention will be now explained.

### (I) Structure of Receiving Apparatus

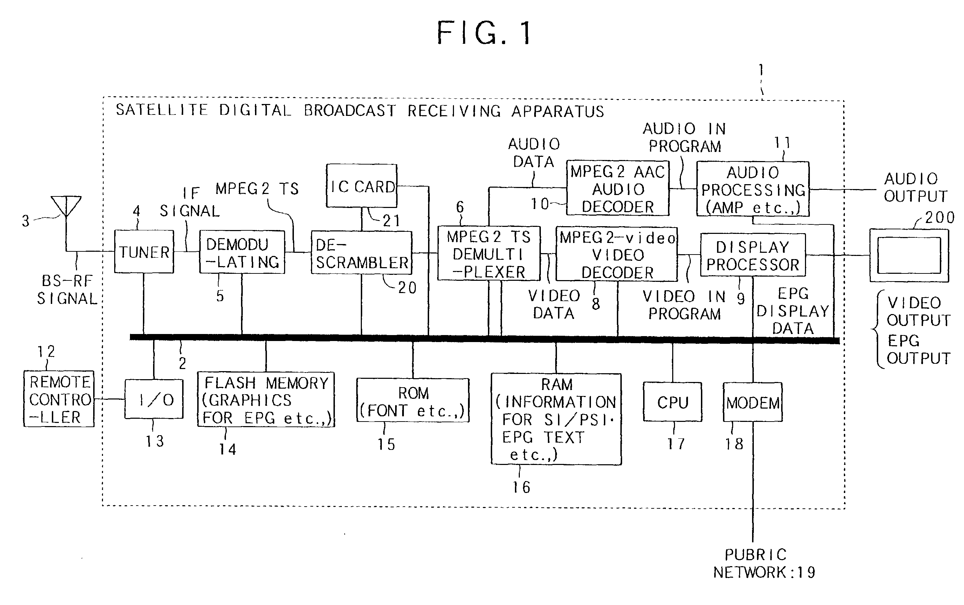

FIG. 1 shows a structure of a satellite digital broadcast receiving apparatus as an embodiment of the present invention. A satellite digital broadcast receiving apparatus 1 shown in FIG. 1 is equipped in each home of a viewer or user, receives a digital broadcast signal (i.e., a broadcast wave) from a satellite and displays a television (TV) program corresponding to it on a picture plane of the television (TV) set at home. Further, the receiving apparatus 1 receives information related to the EPG transmitted from the satellite simultaneously with the digital broadcast signal, and display it on the picture plane of the television set in response to an instruction of the viewer.

As shown in FIG. 1, the receiving apparatus 1 has a structure in which various constitutional elements are connected to a communication bus 2. The receiving apparatus 1 is operative by an attached remote controller 12.

A broadcast wave transmitted from a satellite (i.e., a BS-RF signal) is received by an antenna 3 and is transmitted to a tuner 4 within the receiving apparatus 1. This broadcast wave includes video and audio information of a TV program (which is referred to as "TV program information", hereinafter), as well as the information to be used for displaying the EPG (which is referred to "SI (Service Information)" hereinafter). The tuner 4 is tuned to a receiving band selected by the user, converts the received signal wave to an IF (Intermediate Frequency) signal, and sends it to a demodulating unit 5. The demodulating unit 5 demodulates the inputted digital signal, applies predetermined signal processes such as a re-construction of data frames, an error correcting process and so forth, and supplies it through a de-scrambler 20 to a demultiplexer 6 in a format of a transport stream (which is referred to as a "TS" hereinafter) of the MPEG 2.

The demultiplexer 6 extracts the audio data and video data corresponding to the selected service from among the inputted TS of the MPEG 2, and supplies them to an audio decoder 10 and a video decoder 8 respectively. Here, the audio data is in the format of MPEG 2-AAC, while the video data is in the format of MPEG 2 -Video. The audio decoder 10 decodes the inputted audio data to generate "program audio data" and supplies it to an audio processing unit 11. The audio processing unit 11 includes an amplifier and applies a predetermined audio signal process onto this program audio data, to thereby generate an audio output.

On the other hand, the video decoder 8 decodes the inputted video data to generate "program video data" and supplies it to a display processor 9. The display processor 9 applies a predetermined process onto this program video data, to thereby output a video output to a TV display device 200. Further, the display processor 9 has a function of superimposing character information on the program video image displayed on the picture plane of the TV displaying device 200. The EPG display data described later in detail is superimposed on the program video data by the display processor 9 and is outputted such that the program video data is partially replaced by the EPG display data, to be thereby displayed on the TV displaying device 200.

The demultiplexer 6 extracts control data including the SI out of the TS in the inputted MPEG 2. The SI is the origin of the EPG display data. The EPG displaying process is performed by using this SI. The control data including the SI extracted by the demultiplexer 6 is stored into a RAM 16 under the control of a CPU 17. Also in the RAM 16, EPG text data to perform the EPG display is stored. A flash memory 14 stores various graphic data to perform the EPG display (e.g., a frame of a program table, a predetermined mark such as a logo mark of each broadcast channel). A ROM 15 stores font data used as the EPG text data and the like.

A limited reception processing unit 7 including the de-scrambler 20 performs a following process. Namely, the limited reception broadcasting of a prior contract (or a prior agreement) type is done by a service unit or a program unit, so that the TS of the relevant MPEG 2 is scrambled (or enciphered) and is then transmitted. The limited reception processing unit 7 consists of the de-scrambler 20, as a de-scramble or decipher processing unit, and an IC card 21 for storing contract information and judging the limitation or allowance of viewing for each user. The IC card 21 is distributed to each user of the receiving apparatus from a service center commonly owned by broadcasting providers. On the IC card 21, the user contract information is described in correspondence with a contract condition between the user and each broadcasting provider. In general, the described content of the IC card 21 is different between the respective users. In case that the user selects the limited broadcast program, the limited reception processing unit 7 uses both of the user contract information stored in the IC card 21 and the de-scrambling related information obtained from the broadcast wave, and thereby performs the de-scrambling process for the TS in the MPEG 2 if the user has a contract for the pertinent service or program. Thus, the user can view this program. On the other hand, if the user does not have such a contract, the de-scrambling process for the TS in the MPEG 2 is not performed, so that the user cannot view this limited reception broadcast program.

Further, in case of the "pay per view program", each time when the user purchases the program, the purchase condition is described into the IC card 21. Then, the pay per view program purchasing information is transmitted from the side of the receiving apparatus 1 to the side of the broadcast provider through the modem 18 and the public network 19 in a predetermined cycle.

The instruction inputted by the user using the remote controller 12 is transmitted through the interface (I/O) 13 to the CPU 17 and is recognized there. The CPU 17 controls the respective constitutional elements within the receiving apparatus 1 in accordance with the instruction given by the user. For example, the instruction to tune a frequency of the channel specified by the user is transmitted to the tuner 4.

In case of the EPG display, the CPU 17 generates the EPG text data from the SI stored in the RAM 16 as the source. Next, the CPU 17 generates the EPG display data by using the graphic data such as the frame data for the TV program table stored in the flash memory 14, the font data stored in the ROM 15 as well as the EPG text data, and then supplies it to the display processor 9. The display processor 9 switches the program video data from the video decoder 8 and the EPG display data to each other, on the basis of the switching instruction from the CPU 17, so as to superimpose the EPG display data on the program data and then output it as the video signal to the TV displaying device 200.

To the communication bus 2, the public network 19 is connected via the modem 18, so as to connect the receiving apparatus 1 with a telephone, a personal computer or the like of the user and thereby perform a necessary communication between the broadcasting station and the home of the viewer. (II) Signal Format

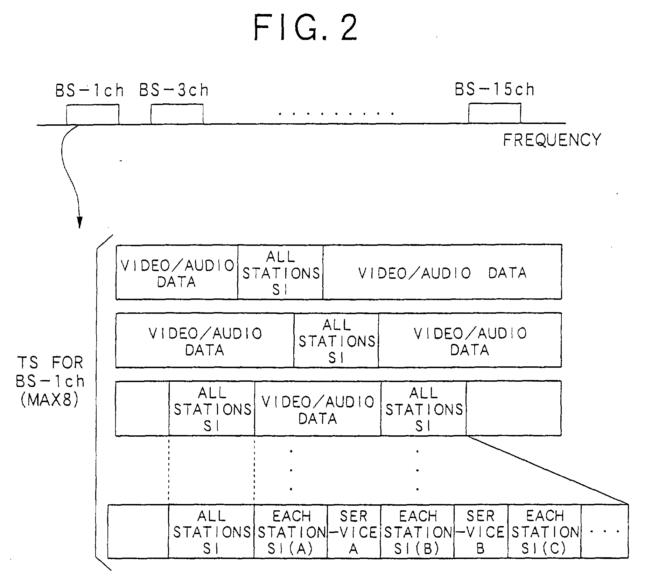

Next, a digital signal is explained, which is transmitted from a satellite as the data, which becomes the source of the EPG display data. FIG. 2 schematically shows a data format of the digital signal. As shown in FIG. 2, in the satellite digital broadcasting system, a plurality of BS channels (bands) are set so that it is possible to transmit 8 TSs in the MPEG 2 at the maximum for each BS channel. Further, it is possible to transmit 32 services at the maximum by one TS. In the following explanation, the frequency band in the satellite broadcast is called as a "BS channel", and is differentiated from the channel for each broadcast program, which is received by the receiving apparatus 1.

In each TS, an all stations SI is multiplexed in the information such as the video information and the audio information. The all stations SI is the SI for all the broadcasting stations, and includes the TV program arrangement information for all the channels. Namely, the all stations SI having the same content is multiplexed on all the TSs of all the BS channels and is then transmitted. By this, even if the channel is received by the user from any one of the broadcasting stations, it is possible to generate the EPG data for all the channels by obtaining the all stations SI included in the TS in this received channel. More concretely, the CPU 17 shown in FIG. 1 obtains the all stations SI from the TS, which is currently being received, by controlling the demultiplexer 6, to thereby constitute the EPG text data on the basis of the obtained all stations SI.

The lower portion of FIG.2 shows the format of the video and audio data in each TS. It has been explained such that the 32 services at the maximum can be transmitted for each TS. These services are time-division-multiplexed in the form of packets within one TS. In the example shown in FIG. 2, the services of the broadcasting stations (e.g., the service A, the service B, ...) are time-division-multiplexed in the TS positioned at the lowest in the figure. Therefore, in order to receive the service A for example, the CPU 17 firstly controls the tuner 4 shown in FIG. 1 to tune the BS channel which includes the TS. Then, the demodulating unit 5 identifies and extracts the TS of the target from among a plurality of TSs included in the BS channel. Then, the demultiplexer 6 extracts the service A, which is time-division-multiplexed in the TS, with referring to the identification information of the service A.

Here, as shown in FIG. 2, at the head of data of each service station (which is indicated by the service A, the service B, ...), the "each station SI" is inserted. The each station SI is the information similar to that of the all stations SI, but includes the information dedicated to respective one of the stations, which is not included in the all stations SI. Namely, the all stations SI includes the information necessary to display the program table as for all the channels as the EPG while the each station SI includes the more detailed information such as the summary of each program. Therefore, the CPU 17 in FIG. 1 obtains the each station SI in response to the instruction of the user, so that the summary information as for a specific channel can be displayed.

### (III) EPG Display Picture Plane

Next, the EPG display picture plane according to the present invention is explained.

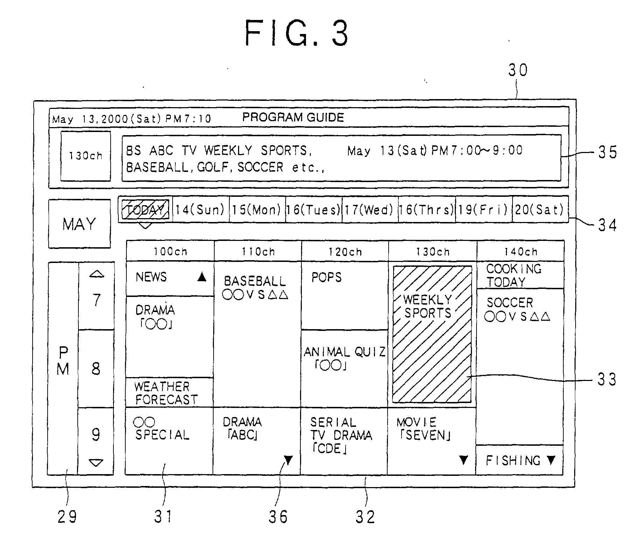

The EPG display picture plane shown in FIG. 3 shows a TV program table of a plurality of channels for each day-of-week, which is referred to as a "day-of-week EPG" in the present invention. As a display aspect of the EPG other than this day-of-week EPG, there is a "genre EPG" which shows the TV programs for each genre The EPG display picture plane may be displayed large over the whole picture plane of the TV display or may be displayed small such that it is superimposed in the video image of the TV program which is being viewed.

At the top field of a day-of-week EPG 30, the present date and time is displayed. The day-of-week EPG 30 has a TV program table for eight days from the present day to the day next week, which corresponds to the same day-of-week as the present day as shown in FIG. 3. The TV program table is prepared for all the channels for each day-of-week. If one of the days is specified by the user by using a day-of-week tab 34 , the TV program table on the specified day is displayed. Each time when a "day-of-week changing key" 47 of the remote controller 12 as described later is pressed once, the TV program table is changed to one for the next day, so that it returns to the TV program table today after it is changed to the TV program table 7 days ahead of today.

The TV program table is shown in a TV program table display area 32. Each unit divided by the frame is called as a TV program cell 31. On the left side of the TV program table display area 32, there is a time band display area 29. The example of FIG. 3 shows the TV program table having the time band from PM 7:00 to PM 10:00 on May 13^{th}(Sat), 2000. At the upper field of the TV program table display area 32, the TV channels arranged in the lateral direction is shown.

In the example of FIG. 3, the program table having a length indicative of 3 hours in the time axis direction and a length indicative of 5 channels in the channel axis direction is shown. However, the present invention is not limited to this. For example, channels in the greater number than 5 may be simultaneously displayed.

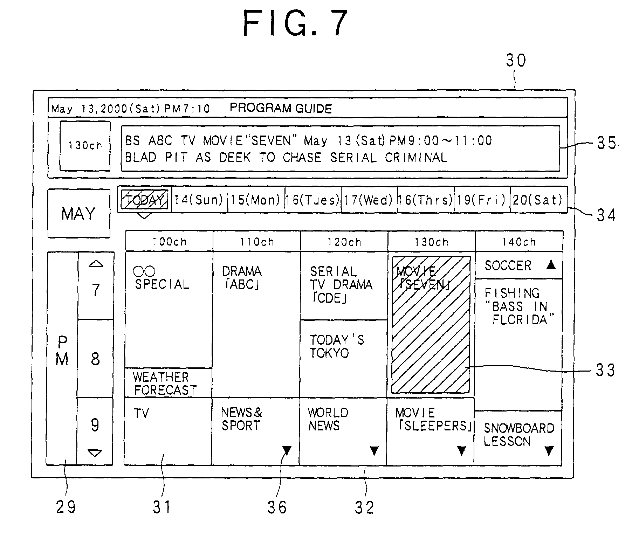

Within a certain program cell 31, a continuation mark 36 is displayed. The continuation mark 36 indicates that the TV program appended with the continuation mark 36 continues in the time axis direction indicated by the continuation mark 36 since the broadcasting time duration of the TV program is too long to be displayed within the TV program table display area 32. For example, although the movie "seven" is a two hours program starting from PM 9:00 at the channel 130 in FIG. 3 (hereinafter, the channel N is referred to simply as the "Nch"), as understood from FIG. 7, the whole of this program cannot be displayed since the time band is limited until PM 10:00. Accordingly, the fact that this program continues after PM 10:00 is indicated by the continuation mark 36. Incidentally, the continuation mark 36, which is directed upward (i.e., ▲ in the figure), indicates that the time band of the program continues in the up direction (i.e., in the direction of earlier in time). On the other hand, the continuation mark 36, which is directed downward (i.e., ▼ in the figure), indicates the time band of the program continues in the down direction (i.e., in the direction of later in time).

The emphasized portion indicated by a cursor 33 (in FIG. 3, which is indicated as a black frame) indicates the program, which is currently selected by the user. In the example of FIG. 3, the program of "weekly sports" is selected. The summary information as for the program which is currently selected is displayed within a summary information field 35 at the upper portion of FIG. 3. This summary information is generated from the all stations SI in each TS described before, as the source.

The width along the time axis of a short time program (such as a weather forecast, a news or the like) for 3 to 5 minutes may be too short to display the character or text indicating the title of the TV program in the EPG display. In such a case, only the program cell may be shown in the EPG display, so that the content of the short program is shown in the summary information field 35 when the user selects such a short program cell. By this, the user can check the content of such a short time program.

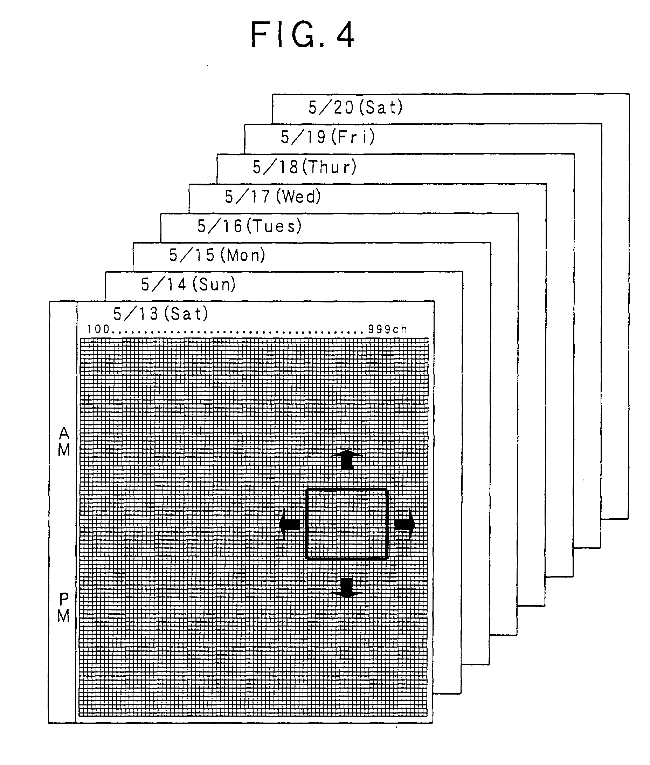

FIG. 4 is a diagram schematically showing the data structure of the day-of-week EPG. As described above, in the day-of-week EPG, the TV program tables for eight days from today to the same day-of-week next week are displayed for each day. Namely, it may be considered such that one TV program table for all channels for each day-of-week is one sheet of a day-of-week EPG sheet 38 and that such a day-of-week EPG 38 is prepared for each day from today until 7 days ahead. Therefore, if the user specifies "today" in the day-of-week tab 34 in FIG. 3, the program table for today is displayed as shown in FIG. 3. If the user specifies "14 (Sun)" in the day-of-week tab 34 in FIG. 3, the program table for May 14^{th}, 2000 (which is tomorrow) is displayed.

The portion displayed as the day-of-week EPG 30 as shown in FIG. 4 is only a portion of one sheet of the day-of-week sheet 38. The display example of FIG. 3 is an example of the day-of-week EPG at PM 07:00 on May 13^{th} (Sat), so that the TV program table from 100ch to 140ch in the time band from PM 07:00 to PM 10:00 is shown. Here, if the user operates the remote controller 12 so as to move the cursor 33 out of the currently displayed range, the program display area 32 shown in FIG. 4 is moved. As a result, one or both of the time band and the channel band of the day-of-week EPG 30 to be displayed is or are changed.

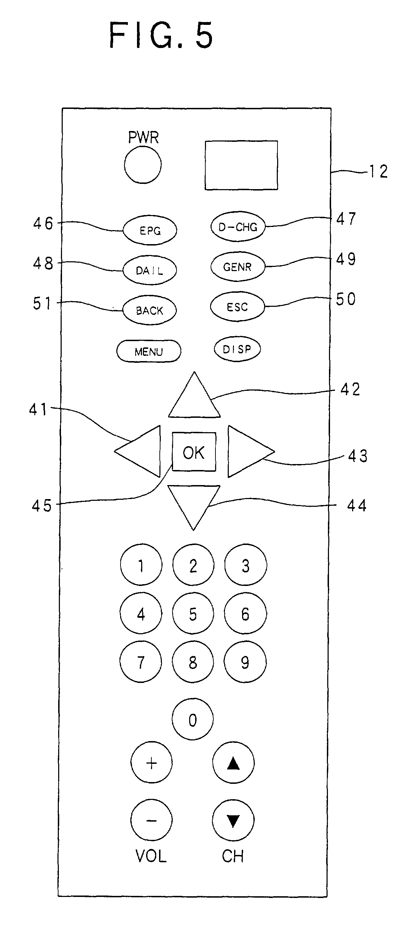

FIG. 5 shows an appearance of the remote controller 12, which is used together with the receiving apparatus 1 of the present invention. Among function keys provided on the upper portion of the remote controller 12, an EPG key 46 is a key to display the EPG picture plane as shown in FIG. 3. Namely, under a condition that a normal program is viewed, if the EPG key 46 is pressed, the picture plane of the TV display is changed from the normal program picture plane to the EPG picture plane as shown in FIG. 3. It is also possible to superimpose such an EPG picture plane on the normal program picture plane. Further, if the EPG key 46 is pressed under a condition that the EPG picture plane is displayed, it is changed back to the original program picture plane. A "day-of-week" ("DAIL") key 48 is located below the EPG key 46, and is to display the day-of-week EPG as shown in FIG. 3. Other than the day-of-week EPG picture plane, there is the genre EPG picture plane as another kind of the EPG picture plane. The day-of-week key 48 is to issue an instruction to select the day-of-week EPG among those various kinds of EPG picture planes.

A "day-of-week changing" ("D-CHG") key 47 is located at a right side of the EPG key 46, and is used to change the day-of-week of the program table in the display. Further, a "genre" ("GENR") key 49 is located below the day-of-week changing key 47, and is to change the EPG picture plane to the genre EPG. An ESC key 50 is located below the genre key 49, and is used to change from the EPG picture plane back to the normal program picture plane. A BACK key 51 is used to cancel an instruction inputted beforehand and returns to the condition before this instruction is inputted.

Cursor movement keys (keys 41 to 44) are disposed at a substantial center of the remote controller 12, and are used to move a position of the cursor 33 in FIG. 3. Under a condition of the display as shown in FIG. 3, if a leftward key 41 is pressed, the cursor moves leftward to an adjacent program cell, while the cursor 33 moves rightward to an adjacent program cell if a rightward key 43 is pressed. Further, if an upward key 42 is pressed, the cursor moves upward to an adjacent program cell, while the cursor 33 moves downward to an adjacent program cell if a downward key 44 is pressed.

Under a condition that the cursor 33 is just moved by the keys 41 to 44, the selection of the program is not yet confirmed on the processes of the receiving apparatus 1. After the cursor 33 is moved, the selection of the program is confirmed by pressing the confirmation ("OK") key 45. For example, under a condition shown in FIG. 3, the receiving apparatus 1 is receiving the program "sports today" at 130ch. Here, if the user presses the leftward key 41, the cursor 33 is moved leftward to the program cell of "pops", which is on the left side within the TV program table display area 32. However, the program, which the receiving apparatus 1 is presently receiving, is still the "sports today". After that, if the user presses the decision key 45, the receiving apparatus 1 changes the reception channel from 130ch to 120ch, so that the reception of the program "pops" is started and the received image of this program "pops" is displayed.

In case that the program cell, which is ahead (in the future) of the present time, is specified by the keys 41 to 44 and the decision key 45, the reservation picture plane for the TV program corresponding to this specified program cell is normally displayed. By performing an operation instructed by the reservation picture plane, it is possible for the user to view or make a reservation of this TV program. Also, in case that the past TV program information is to be erased by sequentially updating the SI, if the program cell in the past is specified, such a message may be displayed that the TV program corresponding to this specified program has already been broadcasted.

Incidentally, the other keys of the remote controller 12 shown in FIG. 5 are related to the normal reception of the TV program, and they are not directly related to the present invention. Thus, the explanations thereof are omitted.

### (IV) Operation on EPG Display Picture Plane

Next, the operation on the EPG display picture plane is explained.

At first, the change of the day-of-week is explained with reference to FIG. 3 to FIG. 6. The change of the day-of-week is a process of changing the day-of-week of the displayed program table. This change corresponds to the change of the day-of-week sheet 38, which is currently selected, in the conceptional diagram of FIG. 4.

By pressing once the day-of-week changing key 47, the day-of-week of the displayed program table is changed once. For example, if the day-of-week changing key 47 is pressed once under a condition that the program table for Monday is displayed, the program table for Tuesday is displayed. Further, if the day-of-week changing key 47 is pressed once more, the program table for Wednesday is displayed. If the day-of-week changing key 47 is pressed once under a condition that the program table for Sunday is displayed, the program table for Monday is displayed. Also, if the day-of-week changing key 47 is pressed once under a condition that the program table for 7 days later (e.g., "20^{th} (Sat)" in the example of FIG. 3) is displayed, the program table for Today is displayed. In this manner, by pressing the day-of-week changing key 47, the day-of-week of the program table displayed within the program table display area 32 is cyclically changed.

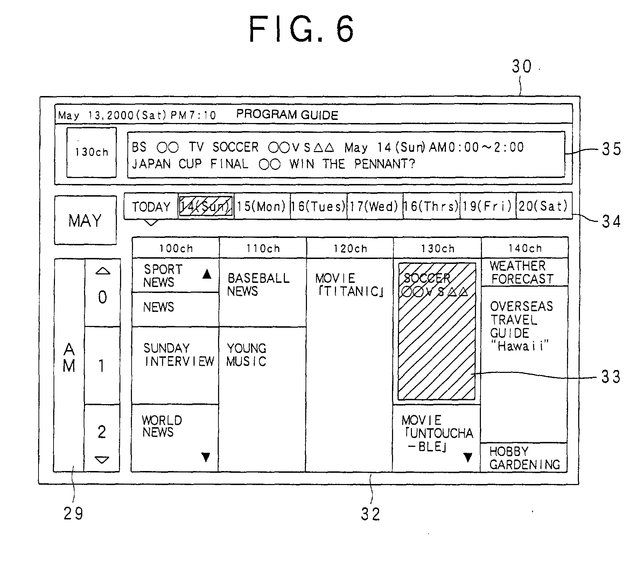

Now, it is assumed that the user is in a condition of viewing the EPG display shown in FIG. 3. Namely, it is assumed that the EPG display picture plane shown in FIG. 3 is displayed on the TV display, the cursor is positioned on the program cell of "weekly sports" at the 130ch, and the recording apparatus 1 is receiving the "weekly sports". Immediately prior to display this EPG display picture plane, the user is viewing this program, and the EPG display picture plane including this program cell is displayed. Here, if the user presses once the day-of-week changing key 47 of the remote controller 12 shown in FIG. 5, the EPG display picture plane shown in FIG. 3 is changed to that shown in FIG. 6.

At first, the day-of-week, which is currently selected within the day-of-week tab 34, is changed from "today" to "14^{th} (Sun)". Also, the time band of the program table displayed within the program table display area 32 is set to AM 00:00 on 14th after the change. Thus, as shown in FIG. 6, the time band display area 29 becomes 3 hours from AM 00:00 to 03:00. After the change of the day-of-week, the channel indicated by the cursor 33 is not changed. Therefore, the position of the cursor 33 is still on the 130ch. Then, the program "soccer ○○VSΔΔ" related to AM 00:00 on 14^{th} is selected by the cursor 33.

In this manner, by constituting the receiving apparatus 1 such that the program table from AM 00:00 on the day-of-week after the change is displayed when the day-of-week is changed, it is possible for the user to view the program on that day in the order of time from the first program. In contrast to this, after the change of the day-of-week, the program table for the time band same as before the change may be displayed. In this case, since the time band of the program table displayed after the change depends on the time band at the time of instructing the change of the day-of-week, it is difficult for the user to instinctively grasp the time band after the change. From this point of view, by always displaying the program table from a predetermined time after the change, since the program table is always displayed from the predetermine time after the change regardless of the time band before the change of the day-of-week, it is easy for the user to instinctively grasp the time band- of the displayed program table and thereby search for the program.

The display time band is AM 00:00 after the change of the day-of-week in the above explained example, it is possible to set another predetermined time such as AM 05:00 or 06:00, from which people are supposed to wake up and start activities, in place of AM 00:00. In any event, by displaying the program table from the predetermined time, it is possible for the user to instinctively grasp the time band displayed after the change of the day-of-week. It is also possible to constitute the receiving apparatus 1 such that this predetermined time can be changed in response to the setting operation by the user.

It is also possible to display the program table from AM 00:00 in the same manner in case that the day-of-week returns to "today" as the user repeatedly inputs the change of the day-of-week. Instead, it is also possible to set the display time band of the program table on the basis of the present time as shown in FIG. 3 in case that the day-of-week returns to "today". The latter is preferred in case that the program information in the past is erased as mentioned before.

Next, the process in case of moving the program cell selected by the cursor 33 in the time axis direction is explained. If the cursor 33 within the program table is moved in the time axis direction by operating the cursor movement key 42 or 44 of the remote controller 12, the time band indicated by the time band display area 29 may be changed along with such a movement. Namely, the time band indicated by the time band display area 29 is not changed in case that the whole program cell selected by the cursor 33 after the movement can be displayed within the program table display area 32 before the movement of the cursor 33. If the cursor 33 is moved to the program cell, which is not included in the program display area 32, the unit time including this program cell is displayed at the lead of the updated program display area 32. For example, if the cursor 33 is moved downward from the "serial drama CDE", the "TODAY'S TOKYO" is positioned at the lead. However, even within the program table display area 32, if the continuation mark 36 is included in the program cell which is selected by the cursor 33 after the change of the time, the time band display area 29 is updated such that the time band including the starting time of the pertinent program cell is positioned at the leading time.

For example, in the program table shown in FIG. 3, under a condition that the cursor 33 is positioned at the "animal quiz" starting from PM 08:00 at the 120ch (although this condition is not same as that shown in FIG. 3), if the downward key 44 of the remote controller 12 is pressed once, the cursor 33 is simply moved to the "serial drama CDE" beneath the "animal quiz", and no change is introduced in the time band display portion 29. This is because the continuation mark 36 is not included in the program cell of the "serial drama CDE".

However, under a condition that the cursor 33 is positioned at the "weekly sports" as shown in FIG. 3, if the downward key 44 is pressed once, the cursor 33 is moved to the "movie "SEVEN"" beneath the "weekly sports". Nevertheless, in the condition shown in FIG. 3, the downward continuation mark 36 is included within the program cell of the "movie "SEVEN"", which implies that this "movie "SEVEN"" continues after PM 10:00. Namely, if the display time band is not changed, only small portion of the program cell of the "movie "SEVEN"" can be displayed.

In such a case, as shown in FIG. 7, the time band of the time band display area 29 is changed, so that the "movie "SEVEN"" can be positioned within the unit time at the lead of the display time band. Namely, the display time band is changed to 3 hours from PM 09:00 which is the starting time of the "movie "SEVEN"". By this, in case of the "movie "SEVEN"", the program cell is displayed from the uppermost portion of the program table display area 32. In this manner, in case that the program cell which is selected after the change of the time cannot be displayed within the program table display area 32 as a result of moving the cursor 33 in the time axis direction, the change of the display time band is performed so that the display time band starts from the unit time including the starting time of the program cell which is selected after the change. Accordingly, the selected program can be easily viewed as much as possible. In addition, in case that the cursor 33 is moved upward (i.e., in the direction toward the past), the same thing can be said.

In the above explained example, if the "movie "SEVEN"" is longer than 3 hours, it is not possible to simultaneously display the whole program cell thereof even in the condition shown in FIG. 7. Even in such a case, since the program cell of the "movie "SEVEN"" starts from the lead of the display time band, the information within the program cell of the "movie "SEVEN"" is displayed as much as possible, so that it is easier for the user to view the program cell as compared with the case that the time band is not changed.

In the above described method, in case that the selected program after the change is a program starting from PM 07:10, the program table from PM 07:00 to PM 10:00 is displayed. However, in such a case, it is also possible to display the program table from the starting time of the selected program after the change i.e., from PM 07:10 to PM 10:10 in the example.

Further, if the cursor is moved further later than PM 12:00 of the same day by continuously moving the cursor 33 in the time axis direction, the day-of-week of the program table is automatically changed to the next day, so that the cursor 33 is set in a condition to select the program cell after AM 00:00 of the next day. If the cursor 33 is moved after PM 12: 00 on 7 days later (e.g., PM 12: 00 on 20th (Sat) in the example of FIG. 3), the day-of-week of the program table is returned to "today", so that the cursor 33 is set in a condition to select the program cell after AM 00:00 today. Nevertheless, in case that there is no program information in the past, the cursor 33 is set in a condition to select the program cell after a predetermined time later where the program information exists.

As a result of changing the day-of-week, if the program cell selected after the change is continuous upward or downward in the time axis direction, one of the two methods may be selectively employed in the same manner as the aforementioned case of moving the cursor in the time axis direction, i.e. the method of adjusting the display time band in response to the starting time of the program cell selected after the movement, and the method of changing only the day-of-week and not changing the display time band regardless of the continuity of the program cell selected after the movement. This selection may be done by the initialization setting operation of the receiving apparatus 1. Alternatively or additionally, the receiving apparatus 1 may be constituted such that the user can select the method later by the setting operation.

### (V) EPG Display Process

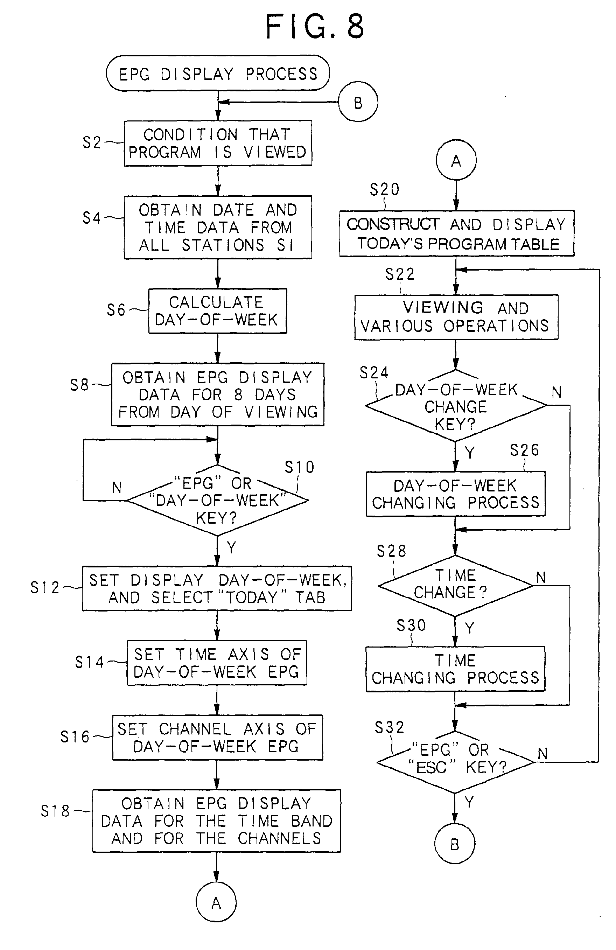

Next, the EPG display process is explained with reference to flowcharts of FIG. 8 to FIG. 10. The processes explained hereinafter are mainly performed as the CPU 17 shown in FIG. 1 executes a predetermined process program stored in the ROM 15, to thereby control the RAM 16, the display processor 9 and so on.

FIG. 8 shows a main routine of the EPG display process.

Now, the receiving apparatus 1 is assumed in such a condition that user operates the receiving apparatus 1 to receive a desirable channel and the corresponding program is being viewed (step S2). At first, the receiving apparatus 1 extracts the all stations SI from the TS of the channel, which is currently received, and obtains the date and time data included in this all stations SI (step S4). In the present system, the management of the date and time data is performed on the broadcasting station side, which transmits the broadcasting wave, and the present date and time data is included in the all stations SI. Thus, the receiving apparatus 1 obtains the date and time data out of the received wave. Next, the receiving apparatus 1 calculates the day-of-week of today i.e., the day of currently viewing the program, from the obtained date and time data (step S6). Normally, since the day-of-week information is not included in the date and time data from the satellite, the day-of-week is determined from the date and time data by using a predetermined calendar calculation.

Then, the EPG display data for 8 days from today i.e., the day of currently viewing the program is obtained as the data for the day-of-week cells of the day-of-week EPG, on the basis of the date and time data and the day-of-week data determined in the above mentioned manner (step S8). As described before, the EPG text data are stored in the RAM 16, which have been made of the all stations SI as the source. Thus, the CPU 17 obtains the corresponding data within the RAM 16, and combines it with the font data within the ROM 15 and the graphic data within the flash memory 14, to thereby constitute the EPG display data and store it into the working memory. The EPG display data constituted in this manner schematically becomes as the image shown in FIG. 4.

Next, it is judged whether or not the EPG key 46 or the day-of-week key 48 (refer to FIG. 5) is pressed by the user (step S10). If it is not pressed (step S10: NO), since the instruction to display the EPG is not given, it is continued to display the program viewing picture plane. On the other hand, if it is pressed (step S10: YES), the day-of-week of viewing in the day-of-week EPG to be displayed is set to today, so that the day-of-week tab 34 for "today" is set into the selected condition (step S12, refer to FIG. 3). Next, the receiving apparatus 1 sets the time axis of the day-of-week EPG to be displayed (step S14). This is done by setting the time of the display lead shown in the time band display area 29 to the lead of the unit time, in which the present time is included. Namely, if the present time is X hour Y minute, the time of the display lead is set to X hour 0 minute. For example, since the present time is PM 07:10 in the example of FIG. 3, the time band display area 29 is set such that the time of the display lead is PM 07:00.

Next, the receiving apparatus 1 sets the channel axis of the day-of-week EPG to be displayed (step S16). Namely, the receiving apparatus 1 maintains the channel axis, which has been viewed at the time when the user presses the EPG key 46 or the day-of-week key 48. Then, the receiving apparatus 1 determines the range to be displayed as the program table (step S18). For example, if the size of the program table, which can be simultaneously displayed, is set to "m hours" in the time axis direction and the "n channels" in the channel axis direction by the setting of the receiving apparatus 1, the display range is determined as corresponding to the m hours from the display leading time set at the step S14 and corresponding to the m channels from the display leading channel set at the set S16. Then, the EPG data corresponding to this determined display range is obtained.

Next, by using the EPG display data obtained in this manner, the CPU 17 and the display processor 9 constitute the program table today, to thereby display it on the TV display (step S20).

Accordingly, the program table as shown in FIG. 3 is displayed. The user performs various operations while inspecting this program table (step S22).

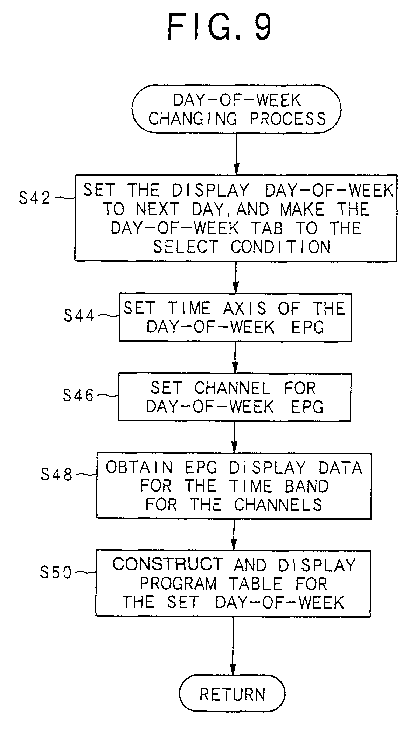

Next, the receiving apparatus 1 judges whether or not the day-of-week changing key 47 is pressed by the user (step S24). If the day-of-week changing key 47 is pressed (step S24: YES), the process proceeds to the day-of-week changing process shown in FIG. 9 (step S26).

In FIG. 9, in the day-of-week changing process, at first, the displayed day-of-week of the day-of-week EPG is set to the next day of the displayed day-of-week before the instruction to change the day-of-week is inputted, and the day-of-week tab 34 on the day-of-week after the change is set in a selected condition (step S42). Then, the time axis of the day-of-week EPG is set (step S44). Namely, the display leading time after the change is set to a predetermined time e.g., AM 00:00 regardless of the time when the instruction to change the day-of-week is inputted. Then, the channel axis of the day-of-week EPG is set (step S46). Namely, the display leading channel is set to the same as in the channel axis before the instruction to change the day-of-week is inputted. Accordingly, the channel, which is currently selected, is not changed by the change of the day-of-week. Then, in the same manner as the step S18, the EPG display data within the display range is obtained (step S48), and the program table after the change of the day-of-week is constituted and displayed (step S 50).

In this manner, the operation of changing the day-of-week is completed. If the day-of-week changing key is pressed once under the condition of the EPG display of FIG. 3, the EPG display picture plane shown in FIG. 6 is displayed. As understood from FIG. 6, the day-of-week tab which is currently selected is changed from "today" to "14th (Sun)", the display time band is changed to 3 hours from AM 00:00, and the currently selected channel is maintained as the 130ch. Further, the summary information as for the program "soccer ○ ○ VSΔΔ" which is selected after the change is shown within the summary information field 35.

Then, the operational flow returns to the main routine of FIG. 8.

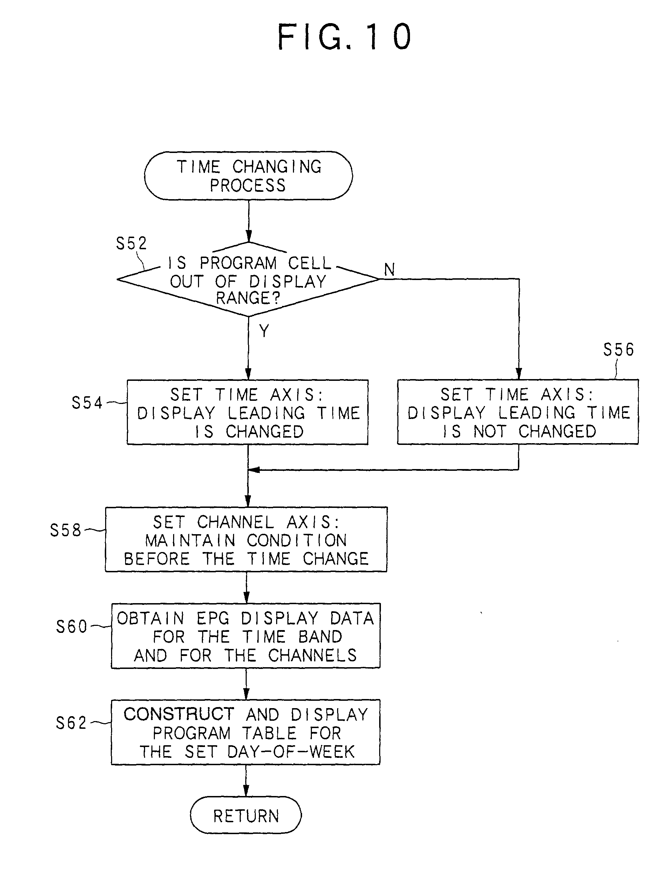

In FIG. 8 again, after the day-of-week changing process is completed (step S26) or the instruction to change the day-of-week is not inputted (step S24: NO), it is judged whether or not the time change is to be performed (step S28). The instruction to change the time on the program table is inputted by moving the cursor 33 within the program table in the time axis direction by operating the cursor movement key 42 or 44. If the instruction to change the time is detected (step S28: YES), the operational flow proceeds to the time changing process shown in FIG. 10 (step S30).

In FIG. 10, at first, it is judged whether or not the cursor 33 after the movement corresponding to the user's instruction to change the time is positioned at the program cell including the continuation mark 36 or the program cell after the change is outside of the currently display range (step S52). If the cursor 33 is positioned at the program cell including the continuation mark 36 or the program cell is outside of the currently display range (step S52: YES), the display leading unit time is set such that the starting time of the program of the program cell after the movement is included therein (step S54). On the other hand, if the cursor 33 is not positioned at the program cell including the continuation mark 36 or the program cell is not outside of the currently display area (step S52: NO), the change of the time axis is not done, i.e., the time axis before the user's instruction to change the time is maintained as it is (step S56).

After that, in the same manner as the steps S46 to S50 in the day-of-week changing process shown in FIG. 9, the channel axis before changing the time is maintained, the EPG display data corresponding to the display area is obtained (step S60), and the program table is constituted and displayed (step S62). By the above explained processes, the time changing process is completed. Then, the operational flow returns to the main routine of FIG. 8.

In FIG. 8 again, the receiving apparatus 1 judges whether or not the EPG key 46 or the ESC key 50 is pressed by the user (step S32). Those operations correspond to the instructions to end the EPG display and return it to the normal program display. Thus, if it is pressed (step S32: YES), the operational flow returns to the step S2, to be in the condition of viewing the program. If it is not pressed (step S32: NO), the operational flow returns to the step S22, to be in a condition of waiting for the user's input. In addition, the process in FIG. 8 is ended by the user's instruction to end e.g., cutting off the electric power of the receiving apparatus 1.

In the display condition of FIG. 3, in case that the cursor 33 is moved downward, the EPG display after the time change becomes as shown in FIG. 7. Since the cursor 33 after the time changing process is positioned at the program cell including the continuation mark 36 (i.e., at the program cell of the "movie "SEVEN""), the receiving apparatus 1 sets the display leading unit time to PM 09:00 which includes PM 09:00 as the starting time of the pertinent program, and also maintains the channel axis as it is. The summary information as for the program indicated by the cursor 33 after the time change is shown in the summary information field 35.

In addition, in the above described example, even if the time changing process is performed, the channel axis before the change is maintained (refer to FIG. 10, the step S58). Instead, it is possible to display the program table such that the channel of the program cell selected after the time changing process is set as the leading channel (i.e., the channel displayed at the left edge of the program table).

In the above described example, the change of the day-of-week is simply forwarded by using the day-of-week changing key 47. Instead or additionally, the day-of-week may be directly or backwardly selected by preparing another key or keys for selecting the day-of-week.

In the above described example, the channel which has been viewed is included in the channel axis after the change. This channel may be positioned at a predetermined position, such as the right edge, the left edge, the center and so on. Alternatively, the channel axis may be displayed such that a plurality of channels are always combined as a specific combination e.g. for each 5 channels and the combination including the pertinent channel is displayed.

In case that the program cell does not exist after the movement, since the unit time, which includes the starting time thereof, is set to the leading time, it is possible to display the program cell as much as possible regardless of the existence or absence of the continuity of such a program.

As described above, according to the present embodiments, in case that the day-of-week changing instruction is inputted during the EPG display, the program table is displayed from the predetermined time on the day after the change. Thus, it is possible for the user to easily and instinctively grasp the time band displayed after the change.

Further, even in case that the time changing instruction is inputted during the EPG display, if the program selected after the change continues in direction of the currently displayed time axis, the program table is displayed from the starting time band of the program selected after the change. Thus, it is possible to display the program so that the user can easily view the program selected after the time change.

## Claims

1. A program guide displaying apparatus (1) for displaying a program table, in which a plurality of program information are displayed in a 2-dimension of a time axis and a channel axis, **characterized in that** said apparatus comprises:
a program information obtaining device (3 to 7) for obtaining the program information including information indicative of a program name, a start time, a length of a program or an end time, a broadcasting channel and a broadcasting date of respective one of a plurality of programs;
a date setting device (12, 13, 17) for setting a date of the program table to be displayed; and
a displaying device (9, 17, 200) for extracting the program information corresponding to the date set by said date setting device from among the program information obtained by said program information obtaining device, displaying the extracted program information as the program table corresponding to the date set by said date setting device and, if the date of the program table is changed by said date setting device, displaying the extracted program information as the program table corresponding to the changed date with a display time band set in advance.

2. A program guide displaying apparatus (1) according to claim 1, **characterized in that**
said displaying device (9, 17, 200) extracts the program information within a time range including the program which is most recently received and within a display channel range including the channel of the program which is most recently received, if the date set by said setting device is a present day, and
said displaying device extracts the program information within a predetermined time range set in advance and within a display channel range including the channel of the program which is most recently received, if the date set by said setting device is not the present day.

3. A program guide displaying apparatus (1) according to claim 1, **characterized in that**, if the date set by said date setting device (12, 13, 17) is a present day, said displaying device (9, 17, 200) displays the program table with the display time band including a present time.

4. A program guide displaying apparatus (1) according to any one of claims 1 to 3, **characterized in that**, if the date of the program table is changed by said date setting device (12, 13, 17), said displaying device (9, 17, 200) displays the program table with a display channel range displayed before the date of the program table is changed.

5. A program guide displaying apparatus (1) for displaying a program table, in which a plurality of program information are displayed in a 2-dimension of a time axis and a channel axis,
**characterized in that** said apparatus comprises:
a program information obtaining device (3 to 7) for obtaining the program information including information indicative of a program name, a start time, a length of a program or an end time, a broadcasting channel and a broadcasting date of respective one of a plurality of programs;
a displaying device (9, 17, 200) for displaying the obtained program information as the program table including a plurality of program cells as for a predetermined display time range and a predetermined display channel range; and
a program cell selecting device (12, 13, 17) for selecting one of the program cells within the displayed program table,
wherein, if the selected program cell is changed in a direction along the time axis by said program cell selecting device and if the changed and selected program cell exceeds the display time range of the program table displayed before changing the selected program cell, said displaying device displays the program table in which the start time of the changed and selected program cell is positioned within a leading display time band.

6. A program guide displaying apparatus (1) according to claim 5, **characterized in that** said apparatus further comprises a date setting device (12, 13, 17) for setting a date of the program table to be displayed,
wherein said displaying device (9, 17, 200) extracts the program information corresponding to the date set by said date setting device from among the program information obtained by said program information obtaining device (3 to 7) and displays the extracted program information as the program table.

7. A program guide displaying apparatus (1) according to claim 5 or 6, **characterized in that** said apparatus further comprises a range setting device (12, 13, 17) for setting the display time range and the display channel range,
wherein said displaying device (9, 17, 200) extracts the program information within the display time range and within the display channel range set by said range setting device from among the program information obtained by said program information obtaining device (3 to 7) and displays the extracted program information as the program table.

8. A program guide displaying apparatus (1) according to any one of claims 5 to 7, **characterized in that** said displaying device (9, 17, 200) displays a cursor on the selected program cell.

9. A program guide displaying apparatus (1) according to any one of claims 5 to 8, **characterized in that**, if the program cell is changed by said program cell selecting device, said displaying device (9, 17, 200) displays the program table with the display channel range same as before the program cell is changed.

10. A program guide displaying apparatus (1) according to any one of claims 5 to 9, **characterized in that**, if the program cell is changed by said program cell selecting device, said displaying device (9, 17, 200) displays the program table in which the channel of the changed and selected program cell is set as a leading display channel.

11. A program guide displaying method of displaying a program table, in which a plurality of program information are displayed in a 2-dimension of a time axis and a channel axis, **characterized in that** said method comprises:
a program information obtaining process of obtaining the program information including information indicative of a program name, a start time, a length of a program or an end time, a broadcasting channel and a broadcasting date of respective one of a plurality of programs;
a date setting process of setting a date of the program table to be displayed; and
a displaying process of extracting the program information corresponding to the date set by said date setting process from among the program information obtained by said program information obtaining process, displaying the extracted program information as the program table corresponding to the date set by said date setting process and, if the date of the program table is changed by said date setting process, displaying the extracted program information as the program table corresponding to the changed date with a display time band set in advance.

12. A program guide displaying method according to claim 11, **characterized in that**
said displaying process extracts the program information within a time range including the program which is most recently received and within a display channel range including the channel of the program which is most recently received, if the date set by said setting process is a present day, and
said displaying process extracts the program information within a predetermined time range set in advance and within a display channel range including the channel of the program which is most recently received, if the date set by said setting process is not the present day.

13. A program guide displaying method according to claim 11, **characterized in that**, if the date set by said date setting process is a present day, said displaying process displays the program table with the display time band including a present time.

14. A program guide displaying method according to any one of claims 11 to 13, **characterized in that**, if the date of the program table is changed by said date setting process, said displaying process displays the program table with a display channel range displayed before the date of the program table is changed.

15. A program guide displaying method of displaying a program table, in which a plurality of program information are displayed in a 2-dimension of a time axis and a channel axis, **characterized in that** said method comprises:
a program information obtaining process of obtaining the program information including information indicative of a program name, a start time, a length of a program or an end time, a broadcasting channel and a broadcasting date of respective one of a plurality of programs;
a displaying process of displaying the obtained program information as the program table including a plurality of program cells as for a predetermined display time range and a predetermined display channel range; and
a program cell selecting process of selecting one of the program cells within the displayed program table,
wherein, if the selected program cell is changed in a direction along the time axis by said program cell selecting process and if the changed and selected program cell exceeds the display time range of the program table displayed before changing the selected program cell, said displaying process displays the program table in which the start time of the changed and selected program cell is positioned within a leading display time band.

16. A program guide displaying method according to claim 15, **characterized in that** said method further comprises a date setting process of setting a date of the program table to be displayed,
wherein said displaying process extracts the program information corresponding to the date set by said date setting process from among the program information obtained by said program information obtaining process and displays the extracted program information as the program table.

17. A program guide displaying method according to claim 15 or 16, **characterized in that** said method further comprises a range setting process of setting the display time range and the display channel range,
wherein said displaying process extracts the program information within the display time range and within the display channel range set by said range setting process from among the program information obtained by said program information obtaining process and displays the extracted program information as the program table.

18. A program guide displaying method according to any one of claims 15 to 17, **characterized in that** said displaying process displays a cursor on the selected program cell.

19. A program guide displaying method according to any one of claims 15 to 18, **characterized in that**, if the program cell is changed by said program cell selecting process, said displaying process displays the program table with the display channel range same as before the program cell is changed.

20. A program guide displaying method according to any one of claims 15 to 19, **characterized in that**, if the program cell is changed by said program cell selecting process, said displaying process displays the program table in which the channel of the changed and selected program cell is set as a leading display channel.
